# EUROPÄISCHE PATENTSCHRIFT

(11) **EP 1 476 010 B1**
(45) Veröffentlichungstag und Bekanntmachung des Hinweises auf die Patenterteilung: **05.07.2006**
(21) Anmeldenummer: 03739503.5
(22) Anmeldetag: 18.02.2003
(51) Int. Cl.: A01K 1/015

(54) **BODENBELAG, INSBESONDERE FÜR TIERSTÄLLE**
FLOOR COVERING, ESPECIALLY FOR ANIMAL SHEDS
REVETEMENT DE SOL, NOTAMMENT POUR ETABLES

(30) Priorität: 18.02.2002 DE 10206714
(43) Veröffentlichungstag der Anmeldung: 17.11.2004
(73) Patentinhaber: Gummiwerk Kraiburg Elastik GmbH, 84529 Tittmoning (DE)
(72) Erfinder: KLINGER, Martin, 84489 Burghausen (DE); STADLER, Reinhold, 84561 Mehring-Öd (DE)
(74) Vertreter: Ruttensperger, Bernhard
(86) Internationale Anmeldenummer: PCT/EP2003/001636
(87) Internationale Veröffentlichungsnummer: WO 2003/069092

(56) Entgegenhaltungen:
- EP-A- 0 557 755
- DE-A- 2 529 832
- DE-A- 2 552 089
- DE-A- 2 648 193
- FR-A- 2 305 100
- GB-A- 2 057 354
- US-A- 4 226 064

## Beschreibung

Die vorliegende Erfindung betrifft einen Bodenbelag, gemäβ dem Oberbegriff des Anspruchs 1, wie er beispielsweise in Tierställen Einsatz finden kann. Der Bodenbelag weist eine einem Untergrund zugewandt zu positionierende Unterseite sowie eine zum Begehen vorgesehene Oberseite auf.

In Tierställen ist eine Entwicklung in Richtung zum Auskleiden der Tierstallböden mit elastischen Belägen erkennbar. Es hat sich gezeigt, dass auf Grund der verbesserten hygienischen Bedingungen die Gefahr von Erkrankungen, insbesondere im Hufbereich, deutlich verringert ist. Auch konnte eine erhöhte Milchproduktion bei Kühen festgestellt werden. Da derartige Bodenbeläge aus elastischem Material beim Begehen durch Tiere vergleichsweise großen Belastungen ausgesetzt sind, die insbesondere im Übergang zu dem im Allgemeinen aus Beton aufgebauten Untergrund zu einer starken Beanspruchung des Bodenbelags führen, ist es bekannt, zweilagige Bodenbeläge vorzusehen, bei welchen an der Oberseite eine Lage aus elastischem Gummimaterial vorgesehen ist, die auf einer auf dem Betonboden aufliegenden Schaumstoffmatfe liegt. Es fassen sich auf diese Art und Weise zum einen die gewünschten Elastizitäten erreichen, zum anderen wird im Übergängsbereich zum Betonboden der Verschleiß gering gehalten. Es bestehen jedoch Akzeptanzprobleme bei derartigen Bodenbelägen, da häufig die Gefahr befürchtet wird, dass im Bereich des Schaumstoffmaterials Verunreinigungen und Feuchtigkeit akkumuliert werden. Um dieser Befürchtung entgegenzutreten, ist versucht worden, einlagig aufgebaute Bodenbeläge einzusetzen, bei welchen die gewünschte Elastizität durch Strukturierung der dem Beton zugewant positionierten Unterseite erlangt wurde. Beispielsweise wurden Noppen an der Unterseite angebracht. Es hat sich jedoch gezeigt, dass, obgleich auch auf diese Art und Weise die gewünschte Elastizität erlangt werden kann, im Bereich der beim Begehen durch Tiere stark belasteten Noppen ein übermäßiger Abrieb aufgetreten ist.

Die US-A-4226064 offenbart einen Bodenbelag gemäß dem Oberbegriff des Anspruchs 1. Dieser Bodenbelag weist an seiner nach unten liegenden Seite eine Auflagestruktur mit einer Vielzahl gleichlanger Auflagevorsprünge auf.

Die FR-U-2 305 100 offenbart einen plattenartigen Bodenbelag, der an seiner Unterseite ebenfalls eine Mehrzahl von durch Verbindungswandabschnitte verbundenen Auflagevorsprüngen mit gleicher Länge aufweist.

Es ist die Aufgabe der vorliegenden Erfindung, einen kostengünstigen Bodenbelag, insbesondere für Tierställe, vorzusehen, welcher bei erhöhter Verschleißfestigkeit ein verbessertes Elastizitätsverhalten aufweist.

Gemäß der im Anspruch 1 definierten vorliegenden Erfindung wird die Aufgabe gelöst durch einen Bodenbelag, insbesondere für Tierställe, wobei der Bodenbelag elastisch verfombar ist und eine einem Untergrund zugewandt zu positionierende Unterseite aufweist, wobei an der Unterseite eine Auflagestruktur gebildet ist, welche eine Mehrzahl von Auflagevorsprüngen aufweist, wobei zwischen wenigstens einem Teil der Vorsprünge sich Verbindungswandbereiche erstrecken und die Auflage vorsprünge unterschiedliche Längen aufweisen.

Durch das Vorsehen einer Strukturierung an der Unterseite, bei welcher Auflagevorsprünge durch Verbindungswandbereiche miteinader verbunden sind, wird eine Abstützung der Auflagevorsprünge erreicht, so dass ein Abknicken derselben unter Belastung weitgehend ausgeschlossen werden kann. Auch dies führt bei Erhalt einer gewünschten Elastizität zu einer verbesserten Verschleißfestigkeit.

Bei einem derartigen Bodenbelag kann beispielsweise vorgesehen sein, dass die Auflagevorsprünge derart angeordnet sind, dass jeweilige Gruppen von Auflagevorsprüngen ringartige oder vieleckartige Konfigurationen bilden. Hierbei ist es dann weiter vorteilhaft, wenn in den ringartigen oder vieleckartigen Konfigurationen jeweils ein längerer Auflagevorsprung auf einen kürzeren Auflagevorsprung folgt. Bei einem derartigen Aufbau kann dann zum Erhalt der gewünschten Verschleißfestigkeit vorgesehen sein, dass die in den ringartigen oder vieleckartigen Konfigurationen aufeinander folgenden Auflagevorsprünge durch Verbindungswandbereiche miteinander verbunden sind.

Ein weiterer Einfluss auf die Elastizität des erfindungsgemäßen Bodenbelags kann dadurch erlangt werden, dass wenigstens ein Teil der ringartigen oder vieleckartigen Konfigurationen jeweils wenigstens einen Auflagevorsprung umgibt. Dabei kann beispielsweise vorgesehen sein, dass die Länge eines von einer ringartigen oder vieleckartigen Konfiguration umgebenen Auflagevorsprungs im Wesentlichen der Länge der kürzeren Auflagevorsprünge der ringartigen oder vieleckartigen Konfiguration entspricht. Wenn bei Vorsehen eines derartigen zusätzlichen Auflagevorsprungs die diesen umgebenden Auflagevorspünge einer zugeordneten ringartigen oder vieleckartigen Konfiguration untereinader bereits durch Verbindungswandbereiche abgestützt sind und insofern bereits ein Abknicken der Vorsprünge und ein dabei auftretendes lokales seitliches Verschieben des Bodenbelages im Wesentlichen nicht auftreten wird, kann weiter vorgesehen sein, dass an wenigstens einem von einer ringartigen oder vieleckartigen Konfiguration umgebenen Auflagevorsprung keine Verbindungswandbereiche anschließen.

Der Bodenbelag weist vorzugsweise in seinem die Unterseite bildenden Bereich eine erste Materialschicht aus bei der Herstellung des Bodenbelags vernetztem Grundmaterial auf und anschließend an die erste Materialschicht eine vorzugsweise auch den die Oberseite bereitstellenden Bereich bildende zweite Materialschicht aus bei Herstellung des Bodenbelags vernetztem Grundmaterial, in welches Füllkörper eingebettet sind.

Durch den mehrschichtigen Aufbau des erfindungsgemäßen Bodenbelags kann dafür gesorgt werden, dass dieser in seinem stark beanspruchten Bereich, nämlich dem im Allgemeinen auf einem Betonuntergrund aufliegenden Bereich der Unterseite, aus einem Material aufgebaut ist, das den auftretenden Belastungen gewachsen ist. Insbesondere sieht die vorliegende Erfindung den Einsatz eines bei der Herstellung des Bodenbelags zum ersten Mal vernetzten Volumenmaterials in diesem stark belasteten Bereich vor. In dem anderen durch Abrieb weniger belasteten Bereich, nämlich vor allem auch dem die Oberseite bildenden Bereich, können dann aus Kostenersparnisgründen zusätzlich Füllkörper vorgesehen sein, die durch Einsatz eines bei Herstellung des Bodenbelags ebenfalls zum ersten Mal vernetzten Materials miteinander verbunden sind. Es wird somit ein vergleichsweise kostengünstig herstellbarer Bodenbelag erhalten, der insbesondere auch auf Grund der Tatsache, dass sowohl das Grundmaterial der ersten Materialschicht als auch das Grundmaterial der zweiten Materialschicht bei der Herstellung des Bodenbelags zum ersten Mal vernetzt werden und somit auch zwischen diesen beiden Materialschichten eine sehr feste Verbindung geschaffen wird, den hohen Belastungen gewachsen ist.

Beispielsweise kann vorgesehen sein, dass die erste Materialschicht im Wesentlichen Natur- oder Synthesekautschuk als Grundmaterial aufweist. Bei Einsatz derartiger Materialien wird die Vernetzung im Allgemeinen durch Vulkanisation erfolgen. D.h., die in dem Kautschukmaterial vorhandenen Doppelbindungen werden aufgebrochen und es werden beispielsweise unter Bildung von Schwefelbrücken Vernetzungsstrukturen zwischen den einzelnen Kautschukmolekülen gebildet. Es ist selbstverständlich, dass diese Vernetzung auch durch andere, nicht schwefelhaltige Materialien erfolgen kann. Dies wird im Wesentlichen von dem Einsatz der Vernetzungsmittel abhängen.

Vor allem bei Einsatz von Natur- oder Synthesekautschuk als Grundmaterial für die erste Materialschicht ist es dann vorteilhaft, wenn die zweite Materialschicht im Wesentlichen Natur- oder Synthesekautschuk als Grundmaterial aufweist und wenn die Füllkörper im Wesentlichen aus vernetztem Natur- oder Synthesekautschuk gebildet sind. Dabei kann aus Kostengründen vorgesehen sein, dass die Füllkörper im Wesentlichen durch aus Recycling gewonnenes Granulat gebildet sind. Hier können beispielsweise durch Recycling von Fahrzeugreifen gewonnene Altgummimaterialien zum Einsatz gelangen.

Alternativ kann bei dem erfindungsgemäßen Bodenbelag vorgesehen sein, dass die erste Materialschicht als Grundmaterial im Wesentlichen Polyurethan oder Ethylenvinylacetat aufweist. In diesem Falle ist es weiter vorteilhaft, wenn die zweite Materialschicht als Grundmaterial im Wesentlichen Polyurethan oder Ethylenvinylacetat aufweist und wenn die Füllkörper elastisch vernetztes Granulat, vorzugsweise Polyurethangranulat oder Ethylenvinylacetatgranulat, umfassen. Hier ist anzumerken, dass beim Einsatz von Polyurethan oder von Ethylenvinylacetat grundsätzlich jedwede Art von bereits elastisch vernetzten Füllkörpern, also beispielsweise auch Gummigranulat; zum Einsatz gelangen kann.

Zur Erhöhung der Stabilität des erfindungsgemäßen Bodenbelags kann weiter vorgesehen sein, dass die zweite Materialschicht direkt an die erste Materialschicht anschließt. Weiter ist es vorteilhaft, wenn die erste Materialschicht in die zweite Mäterialschicht dadurch übergeht, dass in Richtung von der Unterseite weg die Konzentration von Füllkörpern zunimmt.

Gemäß einem weiteren Aspekt betrifft die vorliegende Erfindung ein Verfahren zum Herstellen eines erfindungsgemäßen Bodenbelags umfassend die Schritte:
a) Eingeben eines nicht vernetzten Roh-Grundmaterials für eine erste Materialschicht in eine ein Negativ der Auflagestrucktur bereitstellende Herstellungsform,
b) Vorsehen eines nicht vernetzten Roh-Grundmaterials und von Füllkörpern aus vernetztem Füllkörpermaterial für eine zweite Materialschicht auf dem Roh-Grundmaterial für die erste Materialschicht,
c) unter Druck- und Temperatureinfluss Vernetzen des Roh-Grundmaterials für die erste Materialschicht und des Roh-Grundmaterials für die zweite Materialschicht.

Bei diesem Verfahren kann beispielsweise weiter vorgesehen sein, dass der Schritt a) das Einlegen des Roh-Grundmaterials für die erste Materialschicht in mattenartiger Form umfasst und dass der Schritt b) das Aufstreuen von mit dem Roh-Grundmaterial für die zweite Materialschicht beschichtetem Granulatmaterial umfasst. Weiter ist es möglich, dass der Schritt a) das Einbringen des Roh-Grundmaterials für die erste Materialschicht in fester oder flüssiger Form umfasst und dass der Schritt b) das Eingeben von flüssigem Roh-Grundmaterial für die zweite Materialschicht umfasst, in welchem die Füllkörper enthalten sind.

Die vorliegende Erfindung wird nachfolgend mit Bezug auf die beiliegenden Zeichnungen detailliert beschrieben. Es zeigt:
- Fig. 1: die Unterseite des erfindungsgemäßen Bodenbelags;
- Fig. 2: eine perspektivische Darstellung eines Ausschnitts der an der Unterseite des erfindungsgemäßen Bodenbelags vorgesehenen Strukturierung;
- Fig. 3: eine Schnittansicht des erfindungsgemäßen Bodenbelags, geschnitten längs einer Linie III - III in Fig. 2;
- Fig. 4: vergrößert die Struktur einer Füllkörper enthaltenden Materialschicht des erfindungsgemäßen Bodenbelags.

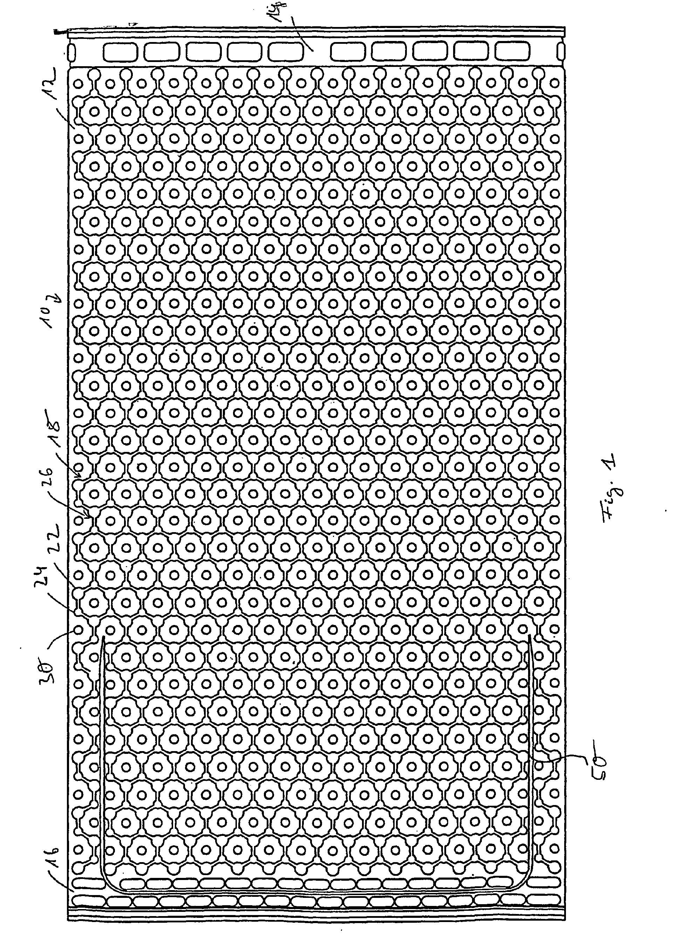

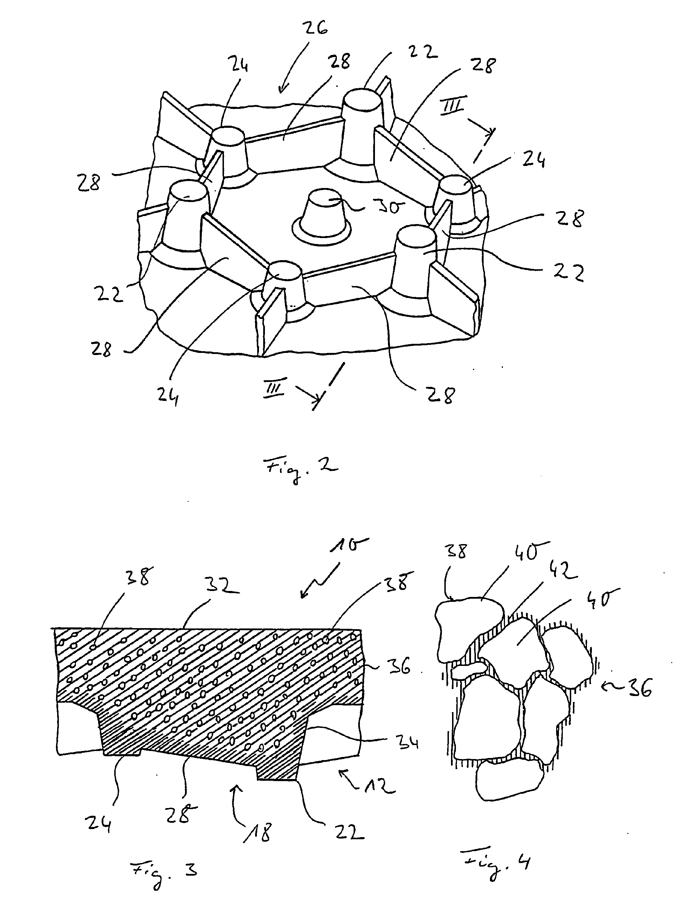

In Fig. 1 ist ein in Form einer Matte 10 ausgebildeter erfindungsgemäßer Bodenbelag von seiner Unterseite 12 sichtbar dargestellt. Die Matte 10 wird im Standbereich eines Tierstalls so ausgelegt, dass ein darauf stehendes Tier, beispielsweise Rind, mit seinem Kopfbereich dem vorderen Ende 14 der Matte 10 zugewandt steht. Das Hinterteil des Tiers ist dann dem hinteren Ende 16 der Matte zugewandt positioniert. An der Unterseite 12 der Matte 10 ist eine allgemein mit 18 bezeichnete Struktur vorgesehen. Die nachfolgend mit Bezug auf die Fig. 2 auch detailliert beschriebene Struktur 18 umfasst eine Vielzahl an Auflagevorsprüngen 22, 24, 30, die, wie in Fig. 1 erkennbar, derart positioniert sind, dass sich in der Gesamtansicht eine wabenartige Struktur ergibt. Man erkennt in Fig. 2, dass diese wabenartige Struktur durch jeweilige Gruppen 26 von Auflagevorsprüngen gebildet sind, in welchen Gruppen 26 die Auflagevorsprünge 22, 24 in einer ringartigen bzw. sechseckartigen Konfiguration aufeinander folgend angeordnet sind. Man erkennt, dass die Auflagevorsprünge 22 und die sich mit diesen jeweils abwechselnden Auflagevorsprünge 24 unterschiedliche Längen aufweisen, so dass in jeder der Gruppen 26 sich ein alternierendes Muster von hohen und niederen Auflagevorsprüngen ergibt. Die Gesamtansicht der Fig. 1 lässt dann weiter erkennen, dass mit Ausnahme der in den Randbereichen der Matte 10 positionierten Auflagevorsprüngen 22, 24 jeder Auflagevorsprung 22 oder 24 drei derartigen Gruppen 26 zugeordnet ist.

Um die einzelnen Auflagevorsprünge 22, 24 der Gruppen 26 gegen ein bei Belastung durch ein Tier möglicherweise auftretendes seitliches Abknicken zu stabiliseren, sind die Auflagevorsprünge 22 bzw. 24 der verschiedenen Gruppen 26 durch jeweils einen Auflagevorsprung 22 mit einem Auflagevorsprung 24 verbindende Verbindungswandbereiche 28 abgestützt. Auf Grund der unterschiedlichen Höhen der in den Gruppen 26 aufeinander folgenden Auflagevorsprünge 22, 24 sind die Verbindungswandbereiche 28 derart ausgebildet, dass sie von den niedrigeren Auflagevorsprüngen 24 zu den höheren Auflagevorsprüngen 22 hin ansteigen, d.h. in der Erstreckungsrichtung der Auflagevorsprünge auch eine größere Abmessung aufweisen. Auf diese Art und Weise wird sichergestellt, dass auch die längeren Auflagevorsprünge 22 sicher gegen seitliches Abknicken stabilisiert werden.

Man erkennt in den Figuren 1 und 2 ferner, dass jede Gruppe 26 von Auflagevorsprüngen 22, 24 mit den diese verbindenden Verbindungswandbereichen 28 einen zentralen Auflagevorsprung 30 umgibt. Dieser zentrale Auflagevorsprung 30 weist keine durch irgendwelche Verbindungswandbereiche hergestellte Anbindung an andere Auflagevorsprünge der diesen umgebenden Gruppe 26 auf. Man erkennt ferner, dass der einer jeweiligen Gruppe 26 zugeordnete zentrale Auflagevorsprung 30 in seiner Länge näherungsweise den kürzeren Auflagevorsprüngen 24 entspricht.

Bei Belastung einer erfindungsgemäß aufgebauten Matte 10 an der Oberseite 32 derselben kommen in den belasteten Bereichen zusätzlich zu den grundsätzlich immer in Kontakt mit einem im Allgemeinen aus Beton aufgebauten Untergrund sich befindenden längeren Auflagevorsprüngen 22 auch die kürzeren Auflagevorsprünge 24 sowie die zentralen Auflagevorsprünge 30 in Kontakt mit dem Untergrund. Bis zu diesem Inkontakttreten wird die Matte 10 in sich verformt. Nach dem Kontakt zwischen den Auflagevorsprüngen 24, 30 und dem Untergrund wird die Elastizität im Wesentlichen bestimmt durch die interne Materialverformung im Bereich der verschiedenen den Untergrund kontaktierenden Auflagevorsprünge. Durch entsprechende Bemessung der verschiedenen Auflagevorsprünge 22, 24, 30 und der verschiedenen Verbindungswandbereiche 28 sowie der Dicke der gesamten Matte 10 kann eine gewünschte Elastizität erhalten werden, die für die zu erwartenden Belastungen am besten angepasst ist. Auf Grund der durch die Verbindungswandbereiche 28 hergestellten Stabilisierung besteht dabei nicht die Gefahr, dass die Auflagevorsprünge 22, 24, 30 seitlich abknicken, so dass auch bei Weglassung einer Schaumstoffunterlage unter Einstellung der gewünschten Elastizität eine sehr gute Haltbarkeit der erfindungsgemäßen Bodenbelagsmatte 10 erlangt werden kann.

Um die bei derartigen teilweise sehr stark belasteten Matten 10 erforderliche Haltbarkeit zu erlangen, kann beispielsweise auch zusätzlich zu der vorangehend bereits angesprochenen Struktur 18 an der Unterseite 12 auf einen im Folgenden beschriebenen inneren Aufbau der Matte 10 zurückgegriffen werden. Dies wird mit Bezug auf die Figuren 3 und 4 nachfolgend detailliert beschrieben.

Die erfindungsgemäße Matte 10 ist im Wesentlichen aus zwei Materialschichten 34, 36 aufgebaut. Dabei bildet die in Fig. 3 feinstrichliert eingezeichnete Materialschicht 34 denjenigen Bereich der Matte 10, der dem Untergrund zugewandt zu positionieren ist und somit die Unterseite 12 bereitstellt. Die Materialschicht 36 bildet den im dargestellten Beispiel an die Materialschicht 34 anschließenden und sich im Wesentlichen bis zur Oberseite 32 durchgehenden Bereich der Matte 10. Die Materialschicht 34 ist aus einem Grundmaterial aufgebaut, das bei der Herstellung der erfindungsgemäßen Matte 10 zum ersten Mal vernetzt wird. Auf diese Art und Weise wird eine in sich sehr stabile Schicht erhalten, die vor allem auch in Verbindung mit dem Betonmaterial des Untergrunds sehr gute Abriebsfestigkeitseigenschaften aufweist. Demgegenüber ist die Materialschicht 36 aus bei der Herstellung der Matte 10 ebenfalls zum ersten Mal vernetztem Grundmaterial aufgebaut, in das Füllkörper 38 eingebettet sind. Durch das Einbetten derartiger Füllkörper 38, die beispielsweise durch Recycling von bereits vernetztem, jedoch elastischem Material erhalten werden können, kann der größere Volumenbereich einer erfindungsgemäßen Matte 10 aus vergleichsweise kostengünstigem Material aufgebaut werden. Konkrete Beispiele zum Aufbau der in Fig. 3 dargestellten Matte 10 werden nachfolgend beschrieben. Beim Herstellungsvorgang einer erfindungsgemäßen Matte 10 in eine ein Negativ der Struktur 18 bereitstellende Form mattenartiges Natur- oder Synthesekautschukmaterial eingelegt, das eine Dicke von einigen Millimetern aufweisen kann. Auf dieses noch nicht vernetzte Roh-Grundmaterial für die Materialschicht 34 werden dann beispielsweise aus Recycling von Altreifen gewonnene Granulatkörner 40, welche in sich bereits vernetzt sind und in der fertiggestellten Matte 10 dann die Füllkörper 38 bilden, aufgestreut. Diese Granulatkörner 40 sind an ihrer Oberfläche mit einem Natur- oder Synthesekautschukmaterial beschichtet, das, ebenso wie das Roh-Grundmaterial für die Materialschicht 34, noch nicht vernetzt ist. Durch Ausübung von Druck und Bereitstellung geeigneter Temperaturen werden die zunächst in die Form eingelegten Rohmaterialmatten für die Materialschicht 34 in die Einsenkungen der Form eingepresst. Bei diesem Vorgang vernetzen sich auch die Makromoleküle dieses Materials, ebenso wie die Moleküle, desjenigen Materials, mit welchem die Granulatkörner 40 beschichtet waren. Es wird dabei dann eine Struktur erhalten, wie sie in Fig. 4 erkennbar ist. Man erkennt dort zwischen den einzelnen Granulatkörnern 40 das nach Temperatur- und Druckausübung.vernetzte Grundmaterial 42 der Materialschicht 36, in welches die als Füllköper 38 wirkenden Körner 40 eingebettet sind. Die Dicke des Grundmaterials 42 zwischen den einzelnen Körnern 40 hängt davon ab, wie dick die Körner zuvor beschichtet waren. Dabei kann grundsätzlich auch in einigen Bereichen ein direkter Kontakt zwischen den einzelnen Körnern 40 entstehen.

Bei dem durch Temperatur- und Druckeinfluss vorangehenden Vernetzen wird auch zwischen den Grundmaterialien der beiden Materialschichten 34 und 36 eine durch Vernetzung gebildete feste Verbindung geschaffen. Somit wird auch zwischen diesen beiden Materialschichten 34, 36 ohne der Notwendigkeit, irgendwelche Verbindungsmittel einfügen zu müssen, ein sehr stabiler, praktisch nicht mehr trennbarer Zusammenhalt geschaffen. Die Folge der erfindungsgemäßen Vorgehensweise ist also, dass eine Matte 10 erhalten wird, bei welcher in dem im Wesentlichen die Unterseite 12 bereitstellenden Volumenbereich die praktisch keine Füllkörper enthaltende und beim Herstellungsvorgang zum ersten Mal vernetzte Materialschicht 34 vorhanden ist und insbesondere in denjenigen Bereichen vorhanden ist, die bei der Belastung von oben her stark beansprucht werden, nämlich den Auflagevorsprüngen 22, 24, 30 und den Verbindungswandbereichen 28. Weiter von der Unterseite 12 weg nimmt dann die Dichte an Füllkörpern 38 zu.

Es sei in diesem Zusammenhang darauf hingewiesen, dass bei Einsatz von Natur- bzw. Synthesekautschuk als Grundmaterial die Vernetzung im Allgemeinen durch Vulkanisieren erfolgen wird, wobei dann beispielsweise bei Einsatz von schwefelhaltigen Vernetzungsmitteln zwischen den einzelnen Molekülen Schwefelbrücken gebildet werden. Selbstverständlich ist auch der Einsatz schwefelfreier Vernetzungsmittel denkbar.

Grundsätzlich ist es auch denkbar, die erfindungsgemäß aufgebaute Matte 10 unter Einsatz anderer beim Herstellungsvorgang zum ersten Mal vernetzter Materialien herzustellen. So kann beispielsweise die Materialschicht 34 aus Polyurethan gebildet sein. Auch das Grundmaterial 42 für die Materialschicht 36 kann in diesem Fall Polyurethan sein, so dass zwischen den beiden Grundmaterialien der Materialschichten 34, 36 wieder eine beim Herstellungsvorgang gebildete sehr stabile Verbindung erzeugt wird. Die in diesem Falle eingesetzten Füllkörper 38 können beispielsweise ebenfalls durch Recycling gewonnene Polyurethankörner aus elastisch vernetztem Polyurethan sein. Grundsätzlich ist bei Einsatz von Polyurethan auch die Verwendbarkeit verschiedener anderer Granulatmaterialien zum Bereitstellen der Füllkörper 38 denkbar, wie z.B. Gummigranulat. Neben dem Einsatz von Polyurethan ist auch der Einsatz von Ethylenvinylacetat für das Grundmaterial der Materialschicht 34 und auch das Grundmaterial der Materialschicht 36 möglich. Es sei in diesem Zusammenhang darauf hingewiesen, dass es vorteilhaft, wenngleich nicht zwingend ist, für diese beiden Materialschichten das gleiche Grundmaterial zu verwenden. Hier können grundsätzlich auch zur Erzeugung verschiedener Elastizitäten bzw. zur Bereitstellung verschieden abriebfester Materialschichten 34 unterschiedliche Materialien zum Einsatz kommen, die beim Herstellungsvorgang dann eine Verbindung eingehen.

Vor allem beim Einsatz flüssiger Grundmaterialien ist es denkbar, in die Form für die zu bildende Matte 10 zunächst beispielsweise flüssiges Polyurethan ohne Zusatz von Füllkörpern einzugießen und dann beim weiteren Eingießen von flüssigem Polyurethan gleichzeitig auch ggf. mit ansteigender Konzentration Füllkörper in die Form miteinzugeben, so dass die Konzentration der Füllkörper von der Unterseite zur Oberseite hin ggf. auch allmählich zunimmt. Selbstverständlich ist es auch denkbar, zunächst mattenartiges Grundmaterial für die Materialschicht 34 in eine Form einzulegen und auf dieses mattenartige Material dann das flüssige und ggf. bereits die Füllkörper 38 enthaltende Grundmaterial für die Materialschicht 36 einzugeben.

Durch den Aufbau der erfindungsgemäß ausgebildeten Matte 10 wird erreicht, dass insbesondere auch in Verbindung mit der erfindungsgemäß vorsehbaren Strukturierung an der Unterseite 12 eine sehr abriebfeste auf dem vorbereiteten Untergrund zur Auflage bringbare Materialschicht bereitgestellt wird, an die dann ein wesentlicher Volumenbereich aus auf Grund des Vorsehens von Füllkörpern sehr kostengünstigem Material anschließt. Bei Einsatz der erfindungsgemäßen Matte kann also sowohl aus Elastizitätsgründen als auch aus Gründen der Haltbarkeit auf den Einsatz irgendwelcher elastischer Unterlagematten, wie z.B. Schaumstoffmatten o. dgl., verzichtet werden.

Man erkennt in der Fig. 1 einen weiteren Aspekt der erfindungsgemäßen Matte 10. Diese weist in dem hinteren Endbereich 16 eine mit geringem Abstand zum Mattenaußenrand verlaufende U-förmige Dichtlippe 50 auf.

Diese U-förmige Dichtlippe 50 verhindert den Eintritt von Verunreinigungen im hinteren Endbereich 16 mit der Folge, dass auch die durch eintretende Verunreinigungen möglicherweise eingeführte Änderung in der Gesamtelastizität in diesem Bereich im Wesentlichen ausgeschlossen werden kann. Dabei ist vorzugsweise vorgesehen, dass die Dichtlippe 50 von ihrem Anbindungsbereich an die Matte 10 in Richtung zu ihrem freien Endbereich hin nach außen, d.h. zum Mattenrand hin, schräg verlaufend ausgebildet ist. Bei Belastung der Dichtlippe von oben erzeugt diese dann einen Wischeffekt, der nahe der Dichtlippe 50 bereits positionierte Verunreinigungen wieder in Richtung zum äußeren Mattenrandbereich fördert. Das Bereitstellen einer derart nach außen angestellten Dichtlippe 50 ist ein besonders vorteilhafter und von der materialmäßigen Zusammensetzung bzw. vom schichtartigen Aufbau der Matte unabhängiger Aspekt, wobei auf Grund des Vorsehens von zum ersten Mal zu vulkanisierendem Material an der Unterseite der Matte 10 dafür gesorgt ist, dass die Lippe 50 mit einer sehr fein auslaufenden Struktur bereitgestellt werden kann.

Ein weiterer vorteilhafter Aspekt der Erfindung liegt darin, dass zumindest ein Teil der längeren Auflagevorsprünge 22 nicht mit einem ebenen Abschluss zur Auflage am Boden endet. Vielmehr können diese Auflagevorsprünge 22 in ihrem freien Endbereich kappenartig abgerundet sein bzw. mit einem abgerundeten oder in sonstiger Weise profiliertem Auflageabschnitt versehen sein, um die Auflageelastizität weiter zu erhöhen. Auch im Bereich von zumindest einigen der kürzeren Auflagevorsprünge 24 kann eine derartige Strukturierung erfolgen.

## Patentansprüche

1. Bodenbelag, insbesondere für Tierställe, wobei der Bodenbelag (10) elastisch verformbar ist und eine einem Untergrund zugewandt zu positionierende Unterseite (12) aufweist, wobei an der Unterseite (12) eine Auflagestruktur (18) gebildet ist, welche eine Mehrzahl von Auflagevorsprüngen (22, 24, 30) aufweist, wobei zwischen wenigstens einem Teil (22, 24) der Auflagevorsprünge (22, 24, 30) sich Verbindungswandbereiche (28) erstrecken, **dadurch** gekennzeichent, dass die Auflagevorsprünge (22, 24, 30) unterschiedliche Längen aufweisen.

2. Bodenbelag nach Anspruch 1,
**dadurch gekennzeichnet, dass** die Auflagevorsprünge (22, 24, 30) derart angeordnet sind, dass jeweilige Gruppen (26) von Auflagevorsprüngen(22, 24) ringartige oder vieleckartige Konfigurationen bilden.

3. Bodenbelag nach Anspruch 2,
**dadurch gekennzeichnet, dass** in den ringartigen oder vieleckartigen Konfigurationen jeweils ein längerer Auflagevorsprung (22) auf einen kürzeren Auflagevorsprung (24) folgt.

4. Bodenbelag nach einem der Ansprüche 2 bis 3.
**dadurch gekennzeichnet, dass** die in den ringartigen oder vieleckartigen Konfigurationen aufeinander folgenden Auflagevorsprünge (22, 24) durch Verbindungswandbereiche (28) miteinander verbunden sind.

5. Bodenbelag nach einem der Ansprüche 2 bis 4,
**dadurch gekennzeichnet, dass** wenigstens ein Teil der ringartigen oder vieleckartigen Konfigurationen jeweils wenigstens einen Auflagevorsprung (30) umgibt.

6. Bodenbelag nach Anspruch 3 und Anspruch 5, **dadurch gekennzeichnet, dass** die Länge eines von einer ringartigen oder vieleckartigen Konfiguration umgebenen Auflagevorsprungs (30) im Wesentlichen der Länge der kürzeren Auflagevorsprünge (24) der ringartigen oder vieleckartigen Konfiguration entspricht.

7. Bodenbelag nach Anspruch 5 oder Anspruch 6, **dadurch gekennzeichnet, dass** an wenigstens einen von einer ringartigen oder vieleckartigen Konfiguration umgebenen Auflagevorsprung (30) keine Verbindungswandbereiche anschließen.

8. Bodenbelag nach einem der Ansprüche 1- 7 **dadurch gekennzeichnet, dass** der Bodenbelag (10) ferner eine zum Begehen vorgesehene Oberseite (32) aufweist, wobei der Bodenbelag (10) in seinem die Unterseite (12) bildenden Bereich eine erste Materialschicht (34) aus bei der Herstellung des Bodenbelags (10) vernetztem Grundmaterial aufweist und anschlieβend an die erste Materialschicht (34) eine vorzugsweise auch den die Oberseite (32) bereitstellenden Bereich bildende zweite Materialschicht (36) aus bei Herstellung des Bodenbelags (10) vernetztem Grundmaterial aufweist, in welches Füllkörper (38) eingebettet sind.

9. Bodenbelag nach Anspruch 8,
**dadurch gekennzeichnet, dass** die erste Materialschicht (34) im Wesentlichen Natur- oder Synthesekautschuk als Grundmaterial aufweist.

10. Bodenbelag nach Anspruch 9,
**dadurch gekennzeichnet, dass** die zweite Materialschicht (36) im Wesentlichen Natur- oder Synthesekautschuk als Grundmaterial aufweist und dass die Füllkörper (38) im Wesentlichen aus vernetztem Natur- oder Synthesekautschuk gebildet sind.

11. Bodenbelag nach Anspruch 10,
**dadurch gekennzeichnet, dass** die Füllkörper (38) im Wesentlichen aus Recycling gewonnenes Granulat gebildet sind.

12. Bodenbelag nach Ansprüche 8,
**dadurch gekennzeichnet, dass** die erste Materialschicht (34) als Grundmaterial im Wesentlichen Polyurethan oder Ethylenvinylacetat aufweist.

13. Bodenbelag nach Anspruch 12,
**dadurch gekennzeichnet, dass** die zweite Materialschicht (36) als Grundmaterial im Wesentlichen Polyurethan oder Ethylenvinylacetat aufweist und dass die Füllkörper (38) elastisch vernetztes Granulat, vorzugsweise Polyurethangranulat oder Ethylenvinylacetatgranulat, umfassen.

14. Bodenbelag nach einem der Ansprüche 8 bis 13.
**dadurch gekennzeichnet, dass** die zweite Materialschicht (36) direkt an die erste Materialschicht (34) anschließt.

15. Bodenbelag nach einem der Ansprüche 8 bis 14,
**dadurch gekennzeichnet, dass** die erste Materialschicht (34) in die zweite Materialschicht (36) **dadurch** übergeht, dass in Richtung von der Unterseite weg die Konzentration von Füllkörpern (38) zunimmt.
**dadurch gekennzeichnet, dass** an wenigstens einen von einer ringartigen oder vieleckartigen Konfiguration umgebenen Auflagevorsprung (30) keine Verbindungswandbereiche anschließen.

16. Verfahren- zum Herstellen eines Bodenbelags nach einem der vorangehenden Ansprüche, umfassend die Schritte:
a) Eingeben eines nicht vernetzten Roh-Grundmaterials für eine erste Materialschicht (34) in eine ein Negativ der Auflagestruktur (18) bereitstellende Herstellungsform,
b) Vorsehen eines nicht vernetzten Roh-Grundmaterials und von Füllkörpern (38) aus vernetztem Füllkörpermaterial für eine zweite Materialschicht (36) auf dem Roh-Grundmaterial für die erste Materialschicht (34),
c) unter Druck- und Temperatureinfluss Vernetzen des Roh-Grundmaterials für die erste Materialschicht (34) und des Roh-Grundmaterials für die zweite Materialschicht (36).

17. Verfahren nach Anspruch 16,
**dadurch gekennzeichnet, dass** der Schritt a) das Einlegen des Roh-Grundmaterials für die erste Materialschicht (34) in mattenartiger Form umfasst und dass der Schritt b) das Aufstreuen von mit dem Roh-Grundmaterial für die zweite Materialschicht (36) beschichtetem Granulatmaterial umfasst.

18. Verfahren nach Anspruch 16,
**dadurch gekennzeichnet, dass** der Schritt a) das Einbringen des Roh-Grundmaterials für die erste Materialschicht (34) in fester oder flüssiger Form umfasst und dass der Schritt b) das Eingeben von flüssigem Roh-Grundmaterial für die zweite Materialschicht (36) umfasst, in welchem die Füllkörper (38) enthalten sind.

## Claims

1. A floor covering, in particular for animal stalls, wherein the floor covering (10) is elastically deformable and has an underside (12) to be positioned facing the ground, wherein on the underside (12) a supporting structure (18) is formed which has a plurality of supporting projections (22,24,30), wherein connecting wall portions (28) extend between at least some (22,24) of the supporting projections (22,24,30).

2. A floor covering according to Claim 1, **characterised in that** the supporting projections (22,24,30) are arranged so that respective groups (26) of supporting projections (22,24) form annular or polygonal configurations.

3. A floor covering according to Claim 2, **characterised in that** in the annular or polygonal configurations in each case a longer supporting projection (22) is followed by a shorter supporting projection (24).

4. A floor covering according to one of Claims 2 to 3, **characterised in that** in the annular or polygonal configurations consecutive supporting projections (22,24) are joined together by connecting wall portions (28).

5. A floor covering according to any one of Claims 2 to 4, **characterised in that** at least some of the annular or polygonal configurations respectively surround at least one supporting projection (30).

6. A floor covering according to Claim 3 and Claim 5, **characterised in that** the length of a supporting projection (30) surrounding an annular or polygonal configuration corresponds substantially to the length of the shorter supporting projection (24) of the annular or polygonal configuration.

7. A floor covering according to Claim 5 or Claim 6, **characterised in that** no connecting wall portions adjoin at least one supporting projection (30) surrounded by an annular or polygonal configuration.

8. A floor covering according to any one of Claims 1 to 7, **characterised in that** the floor covering (10) also has an upper side (32) intended to be walked on, wherein the floor covering (10) has in its zone forming the underside (12) a first material layer (34) consisting of base material cross-linked during the manufacture of the floor covering (10) and, adjacent the first material layer (34), a second material layer (36) preferably also forming the zone providing the upper side (32) and consisting of base material which is cross-linked during the manufacture of the floor covering (10) and in which filling elements (38) are embedded.

9. A floor covering according to Claim 8, **characterised in that** the first material layer (34) has essentially natural or synthetic rubber as base material.

10. A floor covering according to Claim 9, **characterised in that** the second material layer (36) has essentially natural or synthetic rubber as base material, and **in that** the filling elements (38) are formed essentially from natural or synthetic rubber.

11. A floor covering according to Claim 10, **characterised in that** the filling elements (38) are formed essentially from granular material obtained from recycling.

12. A floor covering according to Claim 8, **characterised in that** the first material layer (34) has essentially polyurethane or ethylene vinyl acetate as base material.

13. A floor covering according to Claim 12, **characterised in that** the second material layer (36) has essentially polyurethane or ethylene vinyl acetate as base material, and **in that** the filling elements (38) comprise elastically cross-linked granular material, preferably polyurethane granular material or ethylene vinyl acetate granular material.

14. A floor covering according to any one of Claims 8 to 13, **characterised in that** the second material layer (36) is directly adjacent the first material layer (34).

15. A floor covering according to any one of Claims 8 to 14, **characterised in that** the first material layer (34) is merged into the second material layer (36) by the concentration of filling elements (38) increasing in the direction away from the underside.

16. A method of producing a floor covering according to any one of the preceding Claims, comprising the steps:
a) introducing a non-cross-linked crude base material for a first material layer (34) into a production mould
providing a negative of the supporting structure (18), b) providing a non-cross-linked crude base material and filling element material cross-linked from filling elements (38) for a second material layer (36) on the
crude base material for the first material layer (34), c) under the influence of pressure and temperature crosslinking the crude base material for the first material layer (34) and the crude base material for the second material layer (36).

17. A method according to Claim 16, **characterised in that** step a) comprises loading the crude base material for the first material layer (35) in mat-like form, and **in that** step b) comprises spreading granular material coated with crude base material for the second material layer (36).

18. A method according to Claim 16, **characterised in that** step a) comprises introducing the crude base material for the first material layer (35) in solid or fluid form, and **in that** step b) comprises introducing fluid crude base material for the second material layer (36), which contains the filling elements (38).

## Revendications

1. Revêtement de sol, en particulier pour des étables, le revêtement de sol (10) étant déformable élastiquement et présentant une face inférieure (12) à positionner en l'orientant vers un sous-sol, une structure d'appui (18) étant formée sur la face inférieure (12), structure qui comprend une multitude de saillies (22, 24, 30), des parois de liaison (28) s'étendant entre au moins une partie (22, 24) des saillies (22, 24, 30), **caractérisé en ce que** les saillies (22, 24, 30) présentent des longueurs différentes.

2. Revêtement de sol selon la revendication 1, **caractérisé en ce que** les saillies (22, 24, 30) sont disposées de telle manière que des groupes (26) correspondants de saillies (22, 24) forment des configurations de type annulaire ou polygonal.

3. Revêtement de sol selon la revendication 2, **caractérisé en ce que**, dans les configurations de type annulaire ou polygonal, une saillie plus longue (22) succède toujours à une saillie plus courte (24).

4. Revêtement de sol selon l'une des revendications 2 à 3, **caractérisé en ce que**, dans les configurations de type annulaire ou polygonal, les saillies (22, 24) successives sont reliées les unes aux autres par des parois de liaison (28).

5. Revêtement de sol selon l'une quelconque des revendications 2 à 4, **caractérisé en ce que** au moins une partie des configurations de type annulaire ou polygonal encercle toujours au moins une saillie (30).

6. Revêtement de sol selon la revendication 3 et la revendication 5, **caractérisé en ce que** la longueur d'une saillie (30) encerclée par une configuration de type annulaire ou polygonal équivaut sensiblement à la longueur des saillies plus courtes (24) de la configuration de type annulaire ou polygonal.

7. Revêtement de sol selon la revendication 5 ou la revendication 6, **caractérisé en ce qu'**aucune paroi de liaison n'est raccordée à au moins une saillie (30) encerclée par une configuration de type annulaire ou polygonal.

8. Revêtement de sol selon l'une quelconque de revendications 1 à 7, **caractérisé en ce que** le revêtement de sol (10) comprend en outre une face supérieure (32) prévue pour la marche, le revêtement de sol (10) présentant dans sa zone formant la face inférieure (12) une première couche (34) de matière de base réticulée lors de la fabrication du revêtement de sol (10) et présentant ensuite sur la première couche de matière (34) une seconde couche (36) de matière de base réticulée lors de la fabrication du revêtement de sol (10) et formant de préférence également la zone préparant la face supérieure (32), matière dans laquelle des corps de remplissage (38) sont incorporés.

9. Revêtement de sol selon la revendication 8, **caractérisé en ce que** la première couche de matière (34) comprend essentiellement du caoutchouc naturel ou synthétique comme matière de base.

10. Revêtement de sol selon la revendication 9, **caractérisé en ce que** la seconde couche de matière (36) comprend essentiellement du caoutchouc naturel ou synthétique comme matière de base et **en ce que** les corps de remplissage (38) sont essentiellement formés de caoutchouc naturel ou synthétique réticulé.

11. Revêtement de sol selon la revendication 10, **caractérisé en ce que** les corps de remplissage (38) sont essentiellement formés par des granulés obtenus par recyclage.

12. Revêtement de sol selon la revendication 8, **caractérisé en ce que** la première couche de matière (34) comprend essentiellement du polyuréthane ou de l'acétate de vinyl d'éthylène comme matière de base.

13. Revêtement de sol selon la revendication 12, **caractérisé en ce que** la seconde couche de matière (36) comprend essentiellement du polyuréthane ou de l'acétate de vinyl d'éthylène comme matière de base et **en ce que** les corps de remplissage (38) comportent des granulés élastiquement réticulés, de préférence des granulés de polyuréthane ou des granulés d'acétate de vinyl d'éthylène.

14. Revêtement de sol selon l'une quelconque des revendications 8 à 13, **caractérisé en ce que** la seconde couche de matière (36) est directement liée à la première couche de matière (34).

15. Revêtement de sol selon l'une quelconque des revendications 8 à 14, **caractérisé en ce que** la première couche de matière (34) passe dans la seconde couche de matière (36) avec une augmentation de la concentration de corps de remplissage (38) dans le sens opposé à celui menant vers la face inférieure.

16. Procédé de fabrication d'un revêtement de sol selon l'une quelconque des revendications précédentes, comprenant les étapes suivantes :
a) introduction d'une matière de base brute non réticulée pour une première couche de matière (34) dans un moule de fabrication préparant un négatif de la structure d'appui (18),
b) prévision d'une matière de base brute non réticulée et des corps de remplissage (38) en matière de corps de remplissage réticulée pour une seconde couche de matière (36) sur la matière de base brute pour la première couche de matière (34),
c) sous l'influence de la pression et de la température, réticulation de la matière de base brute pour la première couche de matière (34) et de la matière de base brute pour la seconde couche de matière (36).

17. Procédé selon la revendication 16, **caractérisé en ce que** l'étape a) comprend le chargement de la matière de base brute pour la première couche de matière (34) en forme de tapis et **en ce que** l'étape b) comprend l'épandage du matériau granulé revêtu de la matière de base brute pour la seconde couche de matière (36).

18. Procédé selon la revendication 16, **caractérisé en ce que** l'étape a) comprend le chargement de la matière de base brute pour la première couche de matière (34) sous forme solide ou liquide et **en ce que** l'étape b) comprend l'introduction de matière de base brute liquide pour la seconde couche (36), matière dans laquelle sont contenus les corps de remplissage (38).
